(19) Europäisches Patentamt / European Patent Office / Office européen des brevets

(11) **EP 2 473 912 B1**

(12) **EUROPEAN PATENT SPECIFICATION**

(45) Date of publication and mention
of the grant of the patent:
**29.07.2015 Bulletin 2015/31**

(21) Application number: **10751664.3**

(22) Date of filing: **06.09.2010**

(51) Int Cl.:
***G06F 7/72*** *(2006.01)*

(86) International application number:
**PCT/EP2010/063058**

(87) International publication number:
**WO 2011/026985 (10.03.2011 Gazette 2011/10)**

(54) **MODULAR EXPONENTIATION RESISTANT AGAINST SKIPPING ATTACKS**

GEGENÜBER SKIPPING-ANGRIFFEN RESISTENTE MODULARE POTENZIERUNG

EXPONENTIATION MODULAIRE RÉSISTANTE AUX ATTAQUES PAR SAUT

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **04.09.2009 EP 09305812**

(43) Date of publication of application:
**11.07.2012 Bulletin 2012/28**

(73) Proprietor: **Thomson Licensing
92130 Issy-les-Moulineaux (FR)**

(72) Inventor: **JOYE, Marc
F-92443 Issy Les Moulineaux (FR)**

(74) Representative: **Ståhl, Björn Niclas
Technicolor
1, rue Jeanne d'Arc
92443 Issy-les-Moulineaux (FR)**

(56) References cited:
- **J-M SCHMIDT ET AL: "A Practical Fault Attack on Square and Multiply" FDTC 2008, 10 August 2008 (2008-08-10), pages 53-58, XP031306594 IEEE, PISCATAWAY, NJ, USA ISBN: 978-0-7695-3314-8**
- **CHONG HEE KIM ET AL: "Fault Attacks for CRT Based RSA: New Attacks, New Results, and New Countermeasures" WISTP 2007, LNCS 4462, 9 May 2007 (2007-05-09), pages 215-228, XP019079367 Springer Verlag, Berlin, DE ISBN: 978-3-540-72353-0**
- **GIRAUD C ET AL: "A SURVEY ON FAULT ATTACKS" SMART CARD RESEARCH AND ADVANCED APPLICATIONS VI, 2004, pages 159-176, XP009078209 Springer Boston, Ma, USA ISSN: 1571-5736 DOI: 10.1007/1-4020-8147-2_11 ISBN: 978-1-4020-8146-0**

**Description**

TECHNICAL FIELD

The present invention relates generally to cryptography, and in particular to cryptographic methods resistant to so-called skipping attacks.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Until recently, known fault attacks against RSA (Rivest-Shamir-Adleman), in standard mode, were supposed to be of a rather theoretical nature, as they require a precise fault injection, e.g. a bit flip. However, at the 5th Workshop on Fault Diagnosis and Tolerance in Cryptography (FDTC 2008), Jörn-Marc Schmidt and Christoph Herbst presented a practical fault attack against RSA using low-cost equipment; see "A Practical Fault Attack on Square and Multiply", in Luca Breveglieri, Shay Gueron, Israel Koren, David Naccache, and Jean-Pierre Seifert, editors, FDTC 2008, pages 53-58, IEEE Press, 2008.

The attack will be described hereinafter as applied to the square-and-multiply algorithm in a (multiplicatively written) algebraic group $G$, but the skilled person will appreciate that the attack is applicable also to other exponentiation algorithms. For RSA, $G$ is the multiplicative of integers modulo $N$. The square-and-multiply algorithm takes on input an element $g$ in $G$ and the binary representation of a $t$-bit exponent $d = (d_{t-1}, \cdots, d_0)_2$ with $d_i \in \{0,1\}$; the algorithm returns element $y = g^d$.

Algorithm 1: Square-and-multiply

> **Require:** $g \in G, (d_{t-1}, \cdots, d_0)_2$
>
> **Ensure:** $y = g^d$
>
> 1. $R_0 \leftarrow 1; R_1 \leftarrow g$
>
> 2. **for** $i = t - 1$ **downto** $0$ **do**
>
> 3. $\quad R_0 \leftarrow R_0{}^2$
>
> 4. $\quad$ **if** $(d_i = 1)$ **then** $R_0 \leftarrow R_0 \cdot R_1$
>
> 5. **return** $R_0$

The attack assumes that the attacker manages to skip a squaring operation. This assumption is motivated by the possibility of so-called glitch and spike attacks, as described in the Schmidt and Herbst document already mentioned hereinbefore and by Chong Hee Kim and Jean-Jacques Quisquater in "Fault Attacks for CRT-based RSA: New Attacks, New Results, and New Countermeasures"; in Damien Sauveron, Konstantinos Markantonakis, Angelos Bilas, and Jean-Jacques Quisquater, editors, Information Security Theory and Practices, volume 4462 of Lecture Notes in Computer Science, pages 215-228, Springer Verlag, 2007.

If for example the squaring at step k is skipped, then the output, denoted by $\hat{y}_k$, is given by:

$$\hat{y}_k = \prod_{i=k+1}^{t-1} g^{d_i 2^{i-1}} \cdot \prod_{i=0}^{k} g^{d_i 2^i}$$

It is then possible to retrieve the value of exponent d bit-by-bit, starting from the least significant bit, as

$$\hat{y}_k = \begin{cases} \hat{y}_{k-1} & \text{for } d_k = 0 \\ g^{2^{k-1}} \cdot \hat{y}_{k-1} & \text{for } d_k = 1 \end{cases}$$

It is straightforward to modify the described skipping attack to make it work against other exponentiation algorithms.

Adi Shamir provided an elegant countermeasure against fault attacks in "How to Check Modular Exponentiation", presented at the rump session of EUROCRYPT'97, Konstanz, Germany, May 13, 1997. The countermeasure is:

1. Compute $y' = x^d$ mod $rN$ for a (small) random integer r;
2. Compute $z = x^d$ mod r;
3. Check whether $y' \equiv z$ (mod r), and

- if so, output $y = y'$ mod $N$;
- if not, return "error".

Typically, $r$ is a 64-bit integer. The correctness of Shamir's method is an application of the Chinese remainder theorem (CRT). When the calculations are correct, it is obvious that $y' \equiv y$ (mod $N$) and $y' \equiv z$ (mod $r$). In the presence of faults, the probability that $y' \equiv z$ (mod r) is about $1/r$. When $r$ is a 64-bit value, this means that a fault is undetected with probability of roughly $2^{-64}$. Larger values for $r$ imply a higher detection probability at the expense of more demanding computations.

Shamir's method can be adapted to protect RSA exponentiations when evaluated in CRT mode; i.e, when $y = x^d$ mod $N$ is evaluated from $x^d$ mod $p$ and $x^d$ mod $q$, where p and q are the secret prime factors of $N$. Further generalizations and extensions of Shamir's countermeasure are discussed in "Secure Evaluation of Modular Functions" by Marc Joye, Pascal Paillier, and Sung-Ming Yen, in R.J. Hwang and C.K. Wu, editors, 2001 International Workshop on Cryptology and Network Security, pages 227-229, Taipei, Taiwan, September 2001.

David Vigilant proposed an alternative solution in "RSA With CRT: A New Cost-Effective Solution to Thwart Fault Attacks", in E. Oswald and P. Rohatgi, editors, Cryptographic Hardware and Embedded Systems -- CHES 2008, volume 5154 of Lecture Notes in Computer Science, pages 230-145, Springer, 2008. This solution is to:

1. Form $X = CRT(x \pmod N, 1 + r \pmod{r^2})$ for a (small) random integer r;
2. Compute $y' = X^d$ mod $r^2N$;
3. Check whether $y' \equiv 1 + dr \pmod{r^2}$, and

- if so, output $y = y'$ mod $N$;
- if not, return "error".

In step 1, CRT denotes an application of the Chinese remainder theorem; namely the so-obtained $X$ satisfies $X \equiv x \pmod N$ and $X \equiv 1 + r \pmod{r^2}$. Hence, we have $y' \equiv x^d \pmod N$ and $y' \equiv (1 + r)^d \pmod{r^2}$ when the computations are not faulty. The correctness of step 3 follows from the binomial theorem. We have $(1 + r)^d = \sum_{0 \le k \le d} \binom{d}{k} 1^{d-k} r^k$, where $\binom{d}{k}$ denotes the binomial coefficient. Reducing this identity modulo $r^2$ gives $(1 + r)^d \equiv 1 + dr \pmod{r^2}$ and thus $y' \equiv 1 + dr \pmod{r^2}$ when the computations are not faulty. The probability that a fault is undetected is expected to be about $1/r^2$. As a result, a 32-bit value for r in Vigilant's method should provide the same security level as a 64-bit value for r in Shamir's method.

Vigilant's method presents a couple of advantages over Shamir's method. In particular, it trades the exponentiation $z = x^d$ mod $r$ against the multiplication $1+dr$ mod $r^2$, which is much faster, although it will be appreciated that the evaluation of $z$ in Shamir's method can be sped up as $x^{d \bmod \varphi(r)}$ mod r (where $\varphi$ denotes Euler's totient function), provided that the value of $\varphi(r)$ is known. In addition, Vigilant's method applies to RSA in CRT mode.

Although offering protection against fault attacks (and so against skipping attacks), Shamir's method and its variants when applied to RSA result in larger moduli for the computation. More generally, when applied to a group exponentiation, Shamir's method and its variants imply handling larger elements and somewhat expensive operations (see for example "Sign change fault attacks on elliptic curve cryptosystems" by Johannes Blömer, Martin Otto, and Jean-Pierre-Seifert, in L. Breveglieri et al., editors, Fault Diagnosis and Tolerance in Cryptography, volume 5154 of Lecture Notes in Computer Science, pages 36-52, Springer, 2006, for an application to elliptic curve groups). This may in turn incur important performance losses. It can therefore be appreciated that there is a need for a solution that provides an improved solution against skipping attacks. This invention provides such a solution.

SUMMARY OF INVENTION

In a first aspect, the invention is directed to an exponentiation method resistant against skipping attacks. A device performs an exponentiation in group G using a secret exponent $d$ using an exponentiation algorithm with a number of iterations depending on the length of the representation of the exponent $d$; computes during each iteration, in parallel with the exponentiation, a second value; and outputs, at the end of the exponentiation, a result of the exponentiation only if it is verified that a predetermined relation $h$ exists between the second value and exponent $d$. The exponentiation involves at least a first register and the computation of the second value involves at least a second register, and wherein, at each iteration, the first and second register are evaluated by interleaving the calculations so that each evaluation is started before the other evaluation is finished.

In a first preferred embodiment, the second value is obtained using the same exponentiation algorithm on a group different than group $G$ and using the exponent $d$. It is advantageous that group $G$ is: the multiplicative group of integers modulo $N$ and the different group is the additive group of integers, wherein $N$ is an integer; the group of points on an elliptic curve over a finite field and the different group is the additive group of integers; the multiplicative group of integers modulo $N$ and the different group is the additive group of integers modulo $\Omega$, wherein $N$ and $\Omega$ are integers; or the group of points on an elliptic curve over a finite field and the different group is the additive group of integers modulo $\Omega$, wherein $\Omega$ is an integer.

In a second preferred embodiment, the relation $h$ is identity.

In a third preferred embodiment, the relation $h$ is congruence modulo $\Omega$, wherein $\Omega$ is an integer.

In a fourth preferred embodiment, the first register and the second register are evaluated in parallel, each in a different processor.

In a fifth preferred embodiment, the first register and the second register are evaluated in a single processor by interleaving the calculations so that each evaluation is started before the other evaluation is finished.

In a sixth preferred embodiment, the exponentiation and the computation are dual to each other

In a second aspect, the invention is directed to an apparatus for performing exponentiation resistant against skipping attacks. The device comprises a processor adapted to: perform an exponentiation in group $G$ using a secret exponent d using an exponentiation algorithm with a number of iterations depending on the length of the representation of the exponent $d$; compute during each iteration, in parallel with the exponentiation, a second value; and output, at the end of the exponentiation, a result of the exponentiation only if it is verified that a predetermined relation $h$ exists between the second value and exponent $d$. The exponentiation involves at least a first register and the computation of the second value involves at least a second register, and wherein, at each iteration, the first and second register are evaluated by interleaving the calculations so that each evaluation is started before the other evaluation is finished

In a third aspect, the invention is directed to a computer program product having stored thereon instructions that, when executed by a processor, performs the method of the fifth preferred embodiment of the first aspect.

BRIEF DESCRIPTION OF DRAWINGS

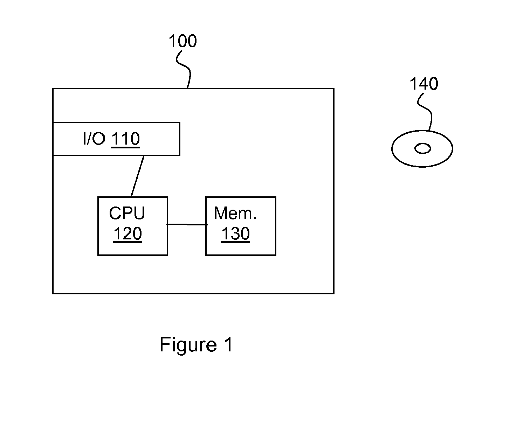

Preferred features of the present invention will now be described, by way of non-limiting example, with reference to the accompanying drawings, in which Figure 1 illustrates an apparatus for performing an exponentiation resistant against skipping attacks according to a preferred embodiment of the invention.

DESCRIPTION OF EMBODIMENTS

For illustrative purposes, the present invention will be described as applied to the square-and-multiply algorithm, but the skilled person will appreciate that it may easily be modified to any other exponentiation algorithm.

As already mentioned, the goal of exponentiation is to evaluate $y = g^d$. A main idea of the present invention is to evaluate, in parallel with $y = g^d$, the value of $f = d \cdot 1$ or a derived value. The evaluations are performed using the same exponentiation algorithm by "gluing" together the group operations underlying the computation of $y$ and $f$. In this context, "gluing" means that the two group operations appear as an "atomic" operation, so as to ensure, or at least make it very likely, that a perturbation to one operation also perturbs the other. This models the fact that a perturbation will likely affect operations that are performed close in time.

The skilled person will appreciate that in this description, the expression "exponentiation" has a broad meaning, covering both 'normal' exponentiation as well as other operations, such as for example multiplication. As stated on Wikipedia under the heading 'Exponentiation': "If the binary operation is written additively, as it often is for abelian groups, then "exponentiation is repeated multiplication" can be reinterpreted as "multiplication is repeated addition". Thus, each of the laws of exponentiation above has an analogue among laws of multiplication." Indeed, Wikipedia then goes one to say that: "When one has several operations around, any of which might be repeated using exponentiation, it is common to indicate which operation is being repeated by placing its symbol in the superscript. Thus, $x^{*n}$ is $x * \cdots * x$, while $x^{\#n}$ is $x \# \cdots \# x$, whatever the operations * and # might be." In "A survey of fast exponentiation methods", Daniel M. Gordon states "Following standard practice, we will talk about the general groups multiplicatively, but elliptic curve groups will be written additively. The two viewpoints are equivalent, and hopefully will not cause too much confusion."

The computation of $f$ may be carried out over the integers or, for better efficiency, over the integers modulo $\Omega$, where $\Omega$ typically is a 32-bit value). The computation is assumed to be error-free if $f$ is equal to d (when calculated over the integers) or if $f$ is equal to d modulo $\Omega$. It should be noted that the correctness may also be checked "on-the-fly", e.g. after the computation of a word of exponent d.

Algorithm 2: Square-and-multiply protected against skipping attacks (I)

**Require:** $g \in G, (d_{t-1}, \cdots, d_0)_2$

**Ensure:** $y = g^d$

1. $R_0 \leftarrow 1; R_1 \leftarrow g$

2. $T_0 \leftarrow 0; T_1 \leftarrow 1$

3. **for** $i = t - 1$ **downto** $0$ **do**

4. $\quad (R_0, T_0) \leftarrow \left(R_0^{\ 2}, 2 \cdot T_0\right)$

5. $\quad$ **if** $(d_i = 1)$ **then** $(R_0, T_0) \leftarrow (R_0 \cdot R_1, T_0 + T_1)$

6. **if** $(T_0 \neq d)$ **then return** error

7. **return** $R_0$

In algorithm 2, $R_0$ is a register comprising the temporary variable used to compute $g^d$ while register $T_0$ is used to compute $f = d \cdot 1$. Algorithm 3 below shows how to evaluate f over the integers modulo $\Omega$. The parenthesis around $R_0$ and $T_0$ in steps 4 and 5 (and, indeed, in algorithm 3 hereinafter) indicates "gluing" of the calculations of the values in the two registers, so that either both registers or none are modified by an entity external to the device performing the exponentiation algorithm. In other words, the two calculations are dual to each other.

Algorithm 3: Square-and-multiply protected against skipping attacks (II)

**Require:** $g \in G, (d_{t-1}, \cdots, d_0)_2$

**Ensure:** $y = g^d$

1. $R_0 \leftarrow 1; R_1 \leftarrow g$

2. $T_0 \leftarrow 0; T_1 \leftarrow 1$

3. **for** $i = t - 1$ **downto** $0$ **do**

4. $(R_0, T_0) \leftarrow \left( R_0{}^2, 2 \cdot T_0 \ (\mathrm{mod}\ \Omega) \right)$

5. **if** $(d_i = 1)$ **then** $(R_0, T_0) \leftarrow \left( R_0 \cdot R_1, T_0 + T_1 \ (\mathrm{mod}\ \Omega) \right)$

6. **if** $(T_0 \neq d \ (\mathrm{mod}\ \Omega))$ **then return** error

7. **return** $R_0$

A variant of algorithm 3 is to compute d = $d$ mod $\Omega$ at the beginning of the algorithm and then to replace the check in step 7 by $T_0 \neq d$, i.e. without the (mod $\Omega$), in which case an error is returned.

More generally, it is also possible to pre-compute a value depending on $d$, say $\bar{d} = h(d)$, and then check whether $h(T_0) = \bar{d}$ for some *function h* (if $h(T_0) \neq \bar{d}$ the algorithm returns an error).

It is worthwhile noting that the operations on ($R_0$, $T_0$) are performed in parallel. Such a behaviour can be emulated by "gluing" together the operations. This is important as otherwise a skipping attack on $R_0$ may remain undetected. In order to "glue" the operations, an additional register A is used together with two random elements $r,r' \in \{0,1\}^{|A|}$. Random elements may be chosen once for all at the beginning of the exponentiation or dynamically whenever a "glued" multiplication is evaluated. In the following algorithm, an overlined element viewed as a bitstring (e.g., $\overline{T}_0$) means the two's complement and $\oplus$ denotes the exclusive-OR operator applied to two elements viewed as bitstrings.

Algorithm 4: Example of "glued" multiplication

**Require:** $R_0, R_1, T_0, T_1, r, r'$

**Ensure:** $(R_0 \cdot R_1, T_0 + T_1)$

1. $A \leftarrow r'$

2. $T_0 \leftarrow \overline{T}_0$

3. $A \leftarrow R_0 \cdot R_1$

4. $A \leftarrow A \oplus r$

5. $T_0 \leftarrow \overline{T}_0 + T_1$

6. $R_0 \leftarrow A \oplus r$

7. **return** $(R_0, T_0)$

It is easily verified that if one of the above instructions in the "glued" multiplication is skipped this will result in a random value for $R_0$ or in an incorrect value for $T_0$, since the evaluation of the registers is interleaved; the evaluation of one begins before the evaluation of the other ends and vice versa In the first case, the returned faulty value for $R_0$ will appear random and so the final output of the exponentiation algorithm will be of no use for the attacker. In the second case, the incorrect value for $T_0$ will be detected at the end of the exponentiation according to our method.

A similar algorithm is easily obtained for squaring, and also where the relevant computations are performed modulo $\Omega$. The skilled person will appreciate that there are numerous possible ways of implementing the "gluing" as long as the skipping of one or several continuous operations result in the loss of consistency.

Figure 1 illustrates a device according to a preferred embodiment of the present invention. The device 100 comprises at least one interface unit 110 adapted for communication with other devices (not shown), at least one processor 120 and at least one memory 130 adapted for storing data, such as accumulators and intermediary calculation results. The processor 120 is adapted to compute an exponentiation method that is protected against skipping attacks according to any of the embodiments of the inventive methods, as previously described herein. A computer program product 140 such as a CD-ROM or a DVD comprises stored instructions that, when executed by the processor 120, performs the method according to any of the embodiments of the invention.

It will be appreciated that a device with a single processor has to simulate parallelism by gluing, using for example the Algorithm 4, for example implemented as parallel threads. However, a multiprocessor device (where the processors may be implemented in a single chip, as often is the case in smartcards) also may use real parallelism; it should be noted that the processors preferably are positioned so as to make skipping attacks as difficult as possible, notably by locating - and particularly the registers - them as close together as possible.

It will be appreciated that the present exponentiation methods can provide improved protection against skipping attacks, while the introduced overhead is minimal and hardly affects the overall computation performance. In addition, the invention can be applied to any exponentiation algorithm.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. An exponentiation method resistant against skipping attacks, the method being performed in a device (100) and comprising the steps of:

   - performing an exponentiation in group G using a secret exponent d using an exponentiation algorithm with a number of iterations depending on the length of the representation of the exponent $d$;
   the exponentiation involving at least a first register;
   the method being **characterised by** further comprising the steps of
   - computing during each iteration, in parallel with the exponentiation, a second value; and
   - outputting, at the end of the exponentiation, the result of the exponentiation only if it is verified that a predetermined relation $h$ exists between the second value and exponent $d$; and
   wherein the computation of the second value involves at least a second register, and wherein, at each iteration, the first and second register are evaluated by interleaving the calculations so that each evaluation is started before the other evaluation is finished.

2. The method of claim 1, wherein the second value is obtained using the same exponentiation algorithm on a group different than group $G$ and using the exponent $d$.

3. The method of claim 1, wherein the exponentiation and the computation are dual to each other.

4. The method of claim 3, wherein the second value is obtained using a dual exponentiation algorithm on a group different than group G and using the exponent d, wherein group $G$ is the multiplicative group of integers modulo $N$ and the different group is the additive group of integers, wherein $N$ is an integer.

5. The method of claim 3, wherein the second value is obtained using a dual exponentiation algorithm on a group different than group G and using the exponent d, wherein group $G$ is the group of points on an elliptic curve over a finite field and the different group is the additive group of integers.

6. The method of claim 3, wherein the second value is obtained using a dual exponentiation algorithm on a group different than group G and using the exponent d, wherein group $G$ is the multiplicative group of integers modulo $N$ and the different group is the additive group of integers modulo $\Omega$, wherein $N$ and $\Omega$ are integers.

7. The method of claim 3, wherein the second value is obtained using a dual exponentiation algorithm on a group different than group G and using the exponent d, wherein group $G$ is the group of points on an elliptic curve over a finite field and the different group is the additive group of integers modulo $\Omega$, wherein $\Omega$ is an integer.

**8.** The method of claim 1, wherein the relation $h$ is identity.

**9.** The method of claim 1, wherein the relation $h$ is congruence modulo $\Omega$, wherein $\Omega$ is an integer.

**10.** The method of claim 1, wherein the first register and the second register are evaluated in parallel, each in a different processor.

**11.** The method of claim 1, wherein the first register and the second register are evaluated in a single processor by interleaving the calculations so that each evaluation is started before the other evaluation is finished.

**12.** An apparatus (100) for performing exponentiation resistant against skipping attacks, the device (100) comprising a processor (120) adapted to:

- perform an exponentiation in group G using a secret exponent d using an exponentiation algorithm with a number of iterations depending on the length of the representation of the exponent d, the exponentiation involving at least a first register;
the apparatus being **characterised in that** the processor (120) is further adapted to
- compute during each iteration, in parallel with the exponentiation, a second value; and
- output, at the end of the exponentiation, the result of the exponentiation only if it is verified that a predetermined relation $h$ exists between the second value and exponent $d$; and

wherein computation of the second value involves at least a second register, and wherein, at each iteration, the first and second register are evaluated in a single processor by interleaving the calculations so that each evaluation is started before the other evaluation is finished.

**13.** A computer program product (140) having stored thereon instructions that, when executed by a processor, performs the method of any one of claims 1 to 11.


**Patentansprüche**

**1.** Potenzierungsverfahren, das gegen Skipping-Angriffe resistent ist, wobei das Verfahren in einer Vorrichtung (100) ausgeführt wird und die folgenden Schritte umfasst:

- Ausführen einer Potenzierung in einer Gruppe G unter Verwendung eines geheimen Exponenten d unter Verwendung eines Potenzierungsalgorithmus mit einer Anzahl von Iterationen, die von der Länge der Darstellung des Exponenten d abhängt;
- wobei die Potenzierung mindestens ein erstes Register umfasst;
wobei das Verfahren **dadurch gekennzeichnet ist, dass** es ferner die folgenden Schritte umfasst:

- Berechnen eines zweiten Werts parallel zu der Potenzierung während jeder Iteration; und
- Ausgeben des Ergebnisses der Potenzierung am Ende der Potenzierung nur wenn verifiziert wird, dass zwischen dem zweiten Wert und dem Exponenten d eine vorgegebene Beziehung h vorliegt; und

wobei die Berechnung des zweiten Werts mindesten ein zweites Register umfasst und wobei das erste und das zweite Register in jeder Iteration dadurch ausgewertet werden, dass die Berechnungen so verschachtelt werden, dass jede Auswertung begonnen wird, bevor die andere Auswertung beendet ist.

**2.** Verfahren nach Anspruch 1, wobei der zweite Wert unter Verwendung desselben Potenzierungsalgorithmus an einer anderen Gruppe als der Gruppe G und unter Verwendung des Exponenten d erhalten wird.

**3.** Verfahren nach Anspruch 1, wobei die Potenzierung und die Berechnung dual zueinander sind.

**4.** Verfahren nach Anspruch 3, wobei der zweite Wert unter Verwendung eines dualen Potenzierungsalgorithmus an einer anderen Gruppe als der Gruppe G und unter Verwendung des Exponenten d erhalten wird, wobei die Gruppe G die multiplikative Gruppe ganzer Zahlen modulo N ist und wobei die andere Gruppe die additive Gruppe ganzer Zahlen ist, wobei N eine ganze Zahl ist.

**5.** Verfahren nach Anspruch 3, wobei der zweite Wert unter Verwendung eines dualen Potenzierungsalgorithmus an einer anderen Gruppe als der Gruppe G und unter Verwendung des Exponenten d erhalten wird, wobei die Gruppe G die Gruppe von Punkten auf einer elliptischen Kurve über einem endlichen Feld ist und wobei die andere Gruppe die additive Gruppe ganzer Zahlen ist.

**6.** Verfahren nach Anspruch 3, wobei der zweite Wert unter Verwendung eines dualen Potenzierungsalgorithmus an einer anderen Gruppe als der Gruppe G und unter Verwendung des Exponenten d erhalten wird, wobei die Gruppe G die multiplikative Gruppe ganzer Zahlen modulo N ist und wobei die andere Gruppe die additive Gruppe ganzer Zahlen modulo $\Omega$ ist, wobei N und $\Omega$ ganze Zahlen sind.

**7.** Verfahren nach Anspruch 3, wobei der zweite Wert unter Verwendung eines dualen Potenzierungsalgorithmus an einer anderen Gruppe als der Gruppe G und unter Verwendung des Exponenten d erhalten wird, wobei die Gruppe G die Gruppe von Punkten auf einer elliptischen Kurve über einem endlichen Feld ist und wobei die andere Gruppe die additive Gruppe ganzer Zahlen modulo $\Omega$ ist, wobei $\Omega$ eine ganze Zahl ist.

**8.** Verfahren nach Anspruch 1, wobei die Beziehung h die Identität ist.

**9.** Verfahren nach Anspruch 1, wobei die Beziehung h eine Kongruenz modulo $\Omega$ ist, wobei $\Omega$ eine ganze Zahl ist.

**10.** Verfahren nach Anspruch 1, wobei das erste Register und das zweite Register jeweils in einem anderen Prozessor parallel ausgewertet werden.

**11.** Verfahren nach Anspruch 1, wobei das erste Register und das zweite Register dadurch in einem einzelnen Prozessor ausgewertet werden, dass die Berechnungen so verschachtelt werden, dass jede Auswertung begonnen wird, bevor die andere Auswertung abgeschlossen ist.

**12.** Vorrichtung (100) zum Ausführen einer Potenzierung, die gegenüber Skipping-Angriffen resistent ist, wobei die Vorrichtung (100) einen Prozessor (120) umfasst, der ausgelegt ist zum:

- Ausführen einer Potenzierung in einer Gruppe G unter Verwendung eines geheimen Exponenten d unter Verwendung eines Potenzierungsalgorithmus mit einer Anzahl von Iterationen, die von der Länge der Darstellung des Exponenten d abhängt, wobei die Potenzierung mindestens ein erstes Register umfasst; wobei die Vorrichtung **dadurch gekennzeichnet ist, dass** der Prozessor (120) ferner ausgelegt ist zum:
- Berechnen eines zweiten Werts parallel zu der Potenzierung während jeder Iteration; und
- Ausgeben des Ergebnisses der Potenzierung am Ende der Potenzierung nur wenn verifiziert wird, dass zwischen dem zweiten Wert und dem Exponenten d eine vorgegebene Beziehung h vorliegt; und wobei die Berechnung des zweiten Werts mindesten ein zweites Register umfasst und wobei das erste und das zweite Register in jeder Iteration dadurch in einem einzelnen Prozessor ausgewertet werden, dass die Berechnungen so verschachtelt werden, dass jede Auswertung begonnen wird, bevor die andere Auswertung beendet ist.

**13.** Computerprogrammprodukt (140), auf dem Anweisungen gespeichert sind, die, wenn sie durch einen Prozessor ausgeführt werden, das Verfahren nach einem der Ansprüche 1 bis 11 ausführen.

**Revendications**

**1.** Un procédé d'exponentiation résistant aux attaques par sauts, le procédé étant effectué dans un dispositif (100) et comprenant les étapes suivantes :

- la réalisation d'une exponentiation dans le groupe G, en utilisant un exposant secret d, en utilisant un algorithme d'exponentiation avec un nombre d'itérations dépendant de la longueur de la représentation de l'exposant d ;
- l'exponentiation impliquant au moins un premier registre ;
le procédé étant **caractérisé en outre par** les étapes suivantes :

- calcul lors de chaque itération, en parallèle de l'exponentiation, d'une seconde valeur ; et
- production, à la fin de l'exponentiation, du résultat de l'exponentiation uniquement s'il est vérifié qu'un lien prédéterminé h existe entre la seconde valeur et l'exposant d ; et

dans lequel le calcul de la seconde valeur implique au moins un second registre, et dans lequel, à chaque itération, le premier et le second registre sont évalués par l'entrelacement des calculs, de sorte que chaque évaluation démarre avant la fin de l'autre évaluation.

2. Le procédé de la revendication 1, dans lequel la seconde valeur est obtenue en utilisant le même algorithme d'exponentiation sur un groupe différent du groupe G et en utilisant l'exposant d.

3. Le procédé de la revendication 1, dans lequel l'exponentiation et le calcul sont dual l'un par rapport à l'autre.

4. Le procédé de la revendication 3, dans lequel la seconde valeur est obtenue en utilisant un algorithme d'exponentiation dual sur un groupe différent du groupe G et en utilisant l'exposant d, dans lequel le groupe G est le groupe multiplicatif d'entiers modulo N et le groupe différent est le groupe additif d'entiers, dans lequel N est un entier.

5. Le procédé de la revendication 3, dans lequel la seconde valeur est obtenue en utilisant un algorithme d'exponentiation dual sur un groupe différent du groupe G et en utilisant l'exposant d, dans lequel le groupe G est le groupe de points sur une courbe elliptique sur un corps fini et le groupe différent est le groupe additif d'entiers.

6. Le procédé de la revendication 3, dans lequel la seconde valeur est obtenue en utilisant un algorithme d'exponentiation dual sur un groupe différent du groupe G et en utilisant l'exposant d, dans lequel le groupe G est le groupe multiplicatif d'entiers modulo N et le groupe différent est le groupe additif d'entiers modulo $\Omega$, dans lequel N et $\Omega$ sont des entiers.

7. Le procédé de la revendication 3, dans lequel la seconde valeur est obtenue en utilisant un algorithme d'exponentiation dual sur un groupe différent du groupe G et en utilisant l'exposant d, dans lequel le groupe G est le groupe de points sur une courbe elliptique sur un corps fini et le groupe différent est le groupe additif d'entiers modulo $\Omega$, où $\Omega$ est un entier.

8. Le procédé de la revendication 1, dans lequel le lien h est l'identité.

9. Le procédé de la revendication 1, dans lequel le lien h est la congruence modulo $\Omega$, où $\Omega$ est un entier.

10. Le procédé de la revendication 1, dans lequel le premier registre et le second registre sont évalués en parallèle, chacun dans un processeur différent.

11. Le procédé de la revendication 1, dans lequel le premier registre et le second registre sont évalués dans un seul processeur en entrelaçant les calculs de sorte que chaque évaluation démarre avant la fin de l'autre évaluation.

12. Un appareil (100) permettant de réaliser une exponentiation résistante aux attaques de saut, le dispositif (100) comprenant un processeur (120) adapté pour :

- effectuer une exponentiation dans le groupe G en utilisant un exposant secret d en utilisant un algorithme d'exponentiation avec un nombre d'itérations dépendant de la longueur de la représentation de l'exposant d, l'exponentiation impliquant au moins un premier registre, l'appareil étant **caractérisé en ce que** le processeur (120) est en outre adapté pour
- calculer lors de chaque itération, en parallèle avec l'exponentiation, une seconde valeur, et
- produire, à la fin de l'exponentiation, le résultat de l'exponentiation uniquement s'il est vérifié qu'un lien prédéterminé h existe entre la seconde valeur et l'exposant d ; et
dans lequel le calcul de la seconde valeur implique au moins un second registre, et dans lequel, à chaque itération, le premier et le second registre sont évalués dans un seul processeur en entrelaçant les calculs, de sorte que chaque évaluation démarre avant la fin de l'autre évaluation.

13. Un produit de programme informatique (140) ayant stocké des instructions qui, lorsqu'elles sont exécutées par un processeur, effectuent le procédé selon l'une quelconque des revendications 1 à 11.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JÖRN-MARC SCHMIDT ; CHRISTOPH HERBST.** *5th Workshop on Fault Diagnosis and Tolerance in Cryptography (FDTC 2008),* 2008
- A Practical Fault Attack on Square and Multiply. IEEE Press, 2008, 53-58
- Fault Attacks for CRT-based RSA: New Attacks, New Results, and New Countermeasures. **CHONG HEE KIM ; JEAN-JACQUES QUISQUATER.** Information Security Theory and Practices, volume 4462 of Lecture Notes in Computer Science. Springer Verlag, 2007, 215-228
- How to Check Modular Exponentiation. *rump session of EUROCRYPT'97,* 13 May 1997

- Secure Evaluation of Modular Functions. **MARC JOYE ; PASCAL PAILLIER ; SUNG-MING YEN.** International Workshop on Cryptology and Network Security. September 2001, 227-229
- RSA With CRT: A New Cost-Effective Solution to Thwart Fault Attacks. Cryptographic Hardware and Embedded Systems -- CHES 2008, volume 5154 of Lecture Notes in Computer Science. Springer, 2008, vol. 5154, 230-145
- Sign change fault attacks on elliptic curve cryptosystems. **JOHANNES BLÖMER ; MARTIN OTTO ; JEAN-PIERRE-SEIFERT et al.** Fault Diagnosis and Tolerance in Cryptography, volume 5154 of Lecture Notes in Computer Science. Springer, 2006, vol. 5154, 36-52